# EUROPÄISCHE PATENTSCHRIFT

(11) **EP 2 542 435 B1**
(45) Veröffentlichungstag und Bekanntmachung des Hinweises auf die Patenterteilung: **03.08.2016**
(21) Anmeldenummer: 11718080.2
(22) Anmeldetag: 05.05.2011
(51) Int. Cl.: B60K 6/387, B60K 6/547, B60K 6/48, B60W 10/10, B60W 30/18, B60W 10/08, B60W 20/00, F16H 37/04, F16H 61/70, F16H 61/04

(54) **ANTRIEBSSTRANG MIT EINEM AUTOMATISIERTEN GRUPPENGETRIEBE**
DRIVE TRAIN WITH AN AUTOMATED AUXILIARY-RANGE TRANSMISSION
CHAÎNE CINÉMATIQUE ÉQUIPÉE D'UN GROUPE PLANÉTAIRE AUTOMATISÉ

(30) Priorität: 28.06.2010 DE 102010030576
(43) Veröffentlichungstag der Anmeldung: 09.01.2013
(73) Patentinhaber: ZF Friedrichshafen AG, 88046 Friedrichshafen (DE)
(72) Erfinder: KALTENBACH, Johannes, 88048 Friedrichshafen (DE)
(86) Internationale Anmeldenummer: PCT/EP2011/057169
(87) Internationale Veröffentlichungsnummer: WO 2012/000704

(56) Entgegenhaltungen:
- EP-A2- 1 466 778
- DE-A1- 10 152 477
- DE-A1- 19 962 854
- DE-A1-102004 031 463
- DE-A1-102008 002 380
- US-A1- 2003 032 515

## Beschreibung

Die Erfindung betrifft einen Antriebsstrang mit einem automatisierten Gruppengetriebe. Des Weiteren betrifft die Erfindung ein Verfahren zum Betreiben eines solchen Antriebsstrangs.

Als Gruppengetriebe ausgebildete, automatisierte Schaltgetriebe mit einem mehrstufigen Hauptgetriebe und einer dem Hauptgetriebe antriebstechnisch nachgeschalteten, insbesondere als Bereichsgruppe ausgeführten, Nachschaltgruppe und/oder einer dem Hauptgetriebe antriebstechnisch vorgeschalteten, insbesondere als Splitgruppe ausgeführten, Vorschaltgruppe sind z. B. aus der DE 10 2007 010 829 A1 bekannt und kommen z. B. in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

Die hier vorliegende Erfindung betrifft einen Antriebsstrang mit einem automatisierten Gruppengetriebe und ein Verfahren zum Betreiben eines solchen Antriebsstrangs, dessen Gruppengetriebe zumindest ein Hauptgetriebe und eine Nachschaltgruppe umfasst. Die Vorschaltgruppe ist optional. Die Nachschaltgruppe ist vorzugsweise als Bereichsgruppe ausgeführt. Dieselbe kann jedoch auch als Splitgruppe ausgeführt sein.

Dann, wenn ein solches automatisiertes Gruppengetriebe in einen Antriebsstrang eines Kraftfahrzeugs integriert ist, ist eine Eingangswelle des automatisierten Gruppengetriebes, nämlich eine Eingangswelle des Hauptgetriebes oder bei Vorhandensein einer Vorschaltgruppe eine Eingangswelle der Vorschaltgruppe, über eine steuerbare Anfahrkupplung mit dem Antriebsaggregat und eine Ausgangswelle des automatisierten Gruppengetriebes mit einem Achsantrieb verbunden.

Dann, wenn das Antriebsaggregat als reiner Verbrennungsmotor oder als Hybridantrieb mit einem Verbrennungsmotor ausgeführt ist, ist der Verbrennungsmotor über die Anfahrkupplung mit der Eingangswelle des Gruppengetriebes gekoppelt. Dann, wenn das Antriebsaggregat als Hybridantrieb mit einem Verbrennungsmotor und einer elektrischen Maschine ausgeführt ist, ist die elektrische Maschine bei aus der Praxis bekannten Antriebssträngen entweder unter Bereitstellung eines sogenannten Kurbelwellenstartergenerators (KSG) zwischen den Verbrennungsmotor und die Anfahrkupplung oder unter Bereitstellung eines sogenannten integrierten Startergenerators (ISG) zwischen die Anfahrkupplung und die Eingangswelle des Gruppengetriebes geschaltet.

Die aus der Praxis bekannten Antriebsstränge, die als Getriebe ein automatisiertes Gruppengetriebe und als Antriebsaggregat einen Hybridantrieb mit einem Verbrennungsmotor und einer elektrischen Maschine aufweisen, verfügen über den Nachteil, dass während der Ausführung einer Schaltung im Gruppengetriebe keine Zugkraftunterstützung zur Kompensation oder zum Ausgleich einer Zugkraftunterbrechung bereitgestellt werden kann, wodurch sich eine Komforteinbuße einstellt.

EP1 466 778 A2 offenbart einen Antriebsstrang eines Kraftfahrzeugs gemäß dem Oberbegriff des Anspruchs 1 oder 2, und ein Verfahren zum Betreiben eines Antriebsstrangs gemäß dem Oberbegriff des Anspruchs 8 oder 11.

Hiervon ausgehend liegt der vorliegenden Erfindung das Problem zu Grunde, einen neuartigen Antriebsstrang mit einem automatisierten Gruppengetriebe zu schaffen.

Dieses Problem wird durch einen Antriebsstrang gemäß Anspruch 1 oder 2 gelöst. Erfindungsgemäß ist die elektrische Maschine des Hybridantriebs zwischen dem Hauptgetriebe und der Nachschaltgruppe und/oder zwischen der Nachschaltgruppe und dem Achsantrieb an den Kraftfluss bzw. Momentfluss des Antriebstrangs koppelbar. Diese Ankopplung kann permanent oder schaltbar ausgeführt sein. Beim erfindungsgemäßen Antriebsstrang ist die elektrische Maschine des Hybridantriebs permanent oder schaltbar zwischen dem Hauptgetriebe und der Nachschaltgruppe und/oder zwischen der Nachschaltgruppe und dem Achsantrieb in den Kraftfluss bzw. Momentfluss koppelbar. Bei einer Schaltung im Gruppengetriebe, insbesondere bei einer Schaltung im Hauptgetriebe und/oder einer Schaltung in der gegebenenfalls vorhandenen Vorschaltgruppe, kann so eine Zugkraftunterstützung bereitgestellt werden, um bei Ausführung der Schaltung eine Zugkraftunterbrechung zu kompensieren bzw. auszugleichen. Hierdurch kann der Komfort gesteigert werden.

Nach einer vorteilhaften Weiterbildung der Erfindung ist die elektrische Maschine des Hybridantriebs abhängig von der Schaltstellung eines als Doppelschaltelement ausgebildeten Schaltelements entweder ausschließlich zwischen dem Hauptgetriebe und der Nachschaltgruppe oder ausschließlich zwischen der Nachschaltgruppe und dem Achsantrieb an Kraftfluss bzw. Momentfluss des Antriebstrangs gekoppelt oder vom Kraftfluss bzw. Momentfluss des Antriebstrangs vollständig abgekoppelt. Dann, wenn die elektrische Maschine schaltbar in den Kraftfluss bzw. Momentfluss gekoppelt ist, und zwar über ein Doppelschaltelement, über welches die elektrische Maschine des Hybridantriebs entweder ausschließlich zwischen dem Hauptgetriebe und der Nachschaltgruppe oder ausschließlich zwischen der Nachschaltgruppe und dem Achsantrieb an den Kraftfluss gekoppelt oder vom Kraftfluss vollständig abgekoppelt ist, ergibt eine besonders vorteilhafte Ausführung des Antriebsstrangs, mit welcher eine Vielzahl unterschiedlicher Betriebssituationen des Antriebsstrangs vorteilhaft abgedeckt werden können.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines erfindungsgemäßen Antriebsstrangs nach einem ersten Ausführungsbeispiel der Erfindung;
- Fig. 2: ein Schema eines erfindungsgemäßen Antriebsstrangs nach einem zweiten Ausführungsbeispiel der Erfindung;
- Fig. 3: ein Schema eines erfindungsgemäßen Antriebsstrangs nach einem dritten Ausführungsbeispiel der Erfindung;
- Fig. 4: ein Schema eines erfindungsgemäßen Antriebsstrangs nach einem vierten Ausführungsbeispiel der Erfindung;
- Fig. 5: ein Schema eines erfindungsgemäßen Antriebsstrangs nach einem fünften Ausführungsbeispiel der Erfindung;
- Fig. 6: ein Schema eines erfindungsgemäßen Antriebsstrangs nach einem sechsten Ausführungsbeispiel der Erfindung;
- Fig. 7: ein Schema eines erfindungsgemäßen Antriebsstrangs nach einem siebten Ausführungsbeispiel der Erfindung;
- Fig. 8: ein Schema eines erfindungsgemäßen Antriebsstrangs nach einem achten Ausführungsbeispiel der Erfindung;
- Fig. 9: ein Schema eines erfindungsgemäßen Antriebsstrangs nach einem neunten Ausführungsbeispiel der Erfindung
- Fig.10: ein Schema eines erfindungsgemäßen Antriebsstrangs nach einem zehnten Ausführungsbeispiel der Erfindung
- Fig. 11: ein Schema eines erfindungsgemäßen Antriebsstrangs nach einem weiteren Ausführungsbeispiel der Erfindung; und
- Fig. 12: ein Schema eines erfindungsgemäßen Antriebsstrangs nach einem weiteren Ausführungsbeispiel der Erfindung.

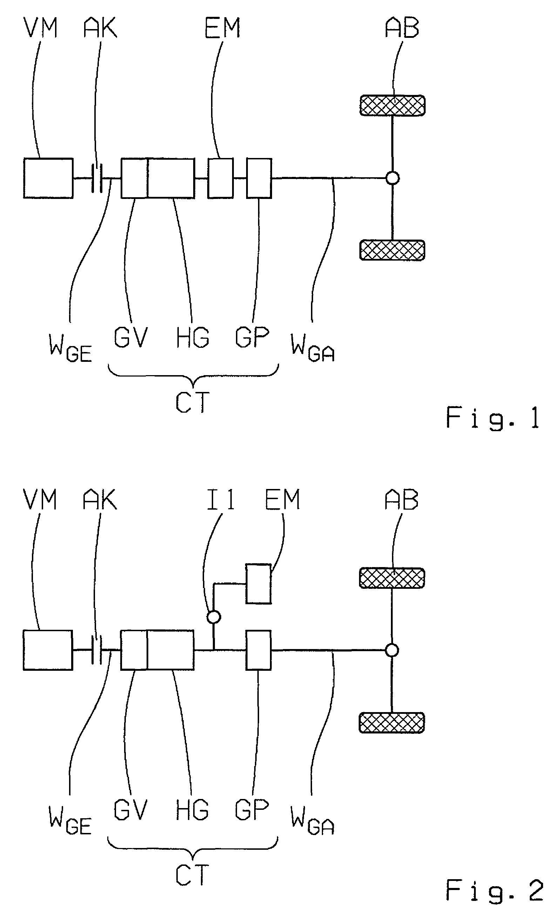

Die hier vorliegende Erfindung betrifft einen Antriebsstrang eines Kraftfahrzeugs, insbesondere eines Nutzfahrzeugs, wobei der Antriebsstrang zumindest einen Hybridantrieb aus einem Verbrennungsmotor VM und einer elektrischen Maschine EM und ein Gruppengetriebe CT umfasst. Das Gruppengetriebe CT umfasst zumindest ein Hauptgetriebe HG und eine dem Hauptgetriebe HG antriebstechnisch nachgeschaltete Nachschaltgruppe GP, wobei die Nachschaltgruppe GP vorzugsweise als Range-Gruppe bzw. Bereichsgruppe ausgeführt ist. Im gezeigten Ausführungsbeispiel der Fig. 1 umfasst das Gruppengetriebe CT zusätzlich noch eine dem Hauptgetriebe HG antriebstechnisch vorgeschaltete Vorschaltgruppe GV, wobei die Vorschaltgruppe GV vorzugsweise als Splitgruppe ausgeführt ist. Gemäß Fig. 1 ist der Verbrennungsmotor VM über eine steuerbare Anfahrkupplung AK an eine Eingangswelle W_{EG} des Gruppengetriebes CT koppelbar. Eine Ausgangswelle W_{GA} des Gruppengetriebes CT ist an einen Achsantrieb AB gekoppelt.

Wie bereits ausgeführt, verfügt der Antriebsstrang der Fig. 1 neben dem Verbrennungsmotor VM über eine elektrische Maschine EM. Verbrennungsmotor VM und elektrische Maschine EM bilden zusammen einen Hybridantrieb, wobei im Sinne der hier vorliegenden Erfindung die elektrische Maschine EM des Hybridantriebs zwischen dem Hauptgetriebe HG und der Nachschaltgruppe GP und/oder zwischen der Nachschaltgruppe GP und dem Achsantrieb AB an den Kraftfluss bzw. Momentfluss des Antriebsstrangs koppelbar ist. Im Ausführungsbeispiel der Fig. 1 ist die elektrische Maschine EM des Hybridantriebs permanent zwischen dem Hauptgetriebe HG und der Nachschaltgruppe GP an den Kraftfluss bzw. Momentfluss des Antriebsstrangs gekoppelt.

Beim Antriebsstrang der Fig. 1 ist es möglich, über die elektrische Maschine EM des Hybridantriebs bei Ausführung einer Schaltung im Hauptgetriebe HG sowie bei Ausführung bei einer Schaltung in der Vorschalgruppe GV eine Zugkraftunterstützung zum Ausgleich bzw. zur Kompensation einer Zugkraftunterbrechung bereitzustellen.

Dabei wird die Nachschaltgruppe GP als Übersetzungsgetriebe für die elektrische Maschine EM des Hybridantriebs genutzt. Auf diese Art und Weise können eine Vielzahl von Hybridfunktion bereitgestellt werden, wie zum Beispiel rein elektrisches Fahren, eine Start/Stopp-Funktion für den Verbrennungsmotor VM, ein sogenanntes elektrisches Boosten sowie ein Rekuperieren.

Das Ausfüllen bzw. Kompensieren einer Zugkraftunterbrechung durch Bereitstellen einer Zugkraftunterstützung über die elektrische Maschine EM des Hybridantriebs ist beim Antriebsstrang der Fig. 1 bei allen Schaltungen im Hauptgetriebe HG sowie bei allen Schaltungen in der Vorschaltgruppe GV möglich. Beim Antriebsstrang der Fig. 1 sind ausschließlich Schaltungen der Nachschaltgruppe GP weiterhin zugkraftunterbrochen.

Dann, wenn beim Antriebsstrang der Fig. 1 das Hauptgetriebe HG über einen sogenannten Overdrive-Gang mit einer Übersetzung <1 verfügt, wird dann, wenn der Verbrennungsmotor VM mithilfe der elektrischen Maschine EM gestartet werden soll, im Hauptgetriebe HG dieser Overdrive-Gang eingelegt. In diesem Fall muss dann von der elektrischen Maschine EM des Hybridantriebs relativ wenig Moment zum Starten des Verbrennungsmotors VM bereitgestellt bzw. aufgebracht werden.

Ferner ist es beim Antriebsstrang der Fig. 1 beim sogenannten Rekuperieren, also beim Bremsen mit einem Moment der elektrischen Maschine EM, möglich, im Hauptgetriebe HG einen Gang nachzuführen, und zwar bei andauernd vollem Moment der elektrischen Maschine EM. Dieses Gangnachführen ist vor allem dann von Vorteil, wenn ein Fahrer anschließend wieder Gas gibt und eine kurze Ansprechzeit auf das Gasgeben gewünscht ist. Für diesen Fall ist im Hauptgetriebe HG der für den Verbrennungsmotor VM passende Gang bereits eingelegt.

Wie bereits ausgeführt, nutzt beim Antriebsstrang der Fig. 1 die elektrische Maschine EM des Hybridantriebs die Übersetzung der Nachschaltgruppe GP. Im Stillstand des Antriebsstrangs kann der Verbrennungsmotor VM über die elektrische Maschine EM des Antriebsstrangs gestartet werden. Ferner kann im Stillstand des Antriebsstrangs die elektrische Maschine EM generatorisch betrieben werden, um zum Beispiel einen Batterie des Antriebsstrangs zu laden oder für ein Boardnetz eine Stromversorgung bereitzustellen. Hierbei befindet sich dann die Nachschaltgruppe GP in Neutral. Bei einer Schaltung in der Nachschaltgruppe GP kann mithilfe der elektrischen Maschine EM eine Synchronisierung durchgeführt werden.

Eine vorteilhafte Weiterbildung des Ausführungsbeispiels der Fig. 1 ist in Fig. 2 gezeigt. In Fig. 2 ist die elektrische Maschine EM wiederum permanent zwischen dem Hauptgetriebe HG des Gruppengetriebes CT und der Nachschaltgruppe GP des Gruppengetriebes CT an den Kraftfluss bzw. Momentfluss des Antriebsstrangs gekoppelt, und zwar gemäß Fig. 2 unter Zwischenschaltung einer Übersetzungsstufe I1. Bei dieser Übersetzungsstufe I1 handelt es sich gemäß Fig. 2 um eine Konstantübersetzung. Hierdurch kann beim Anfahren über die elektrische Maschine EM ein größeres Moment am Achsantrieb AB bereitgestellt werden. Beim Starten des Verbrennungsmotors VM über die elektrische Maschine EM ist weniger Moment erforderlich. Beim Starten des Verbrennungsmotors VM über die elektrische Maschine EM sind im Hauptgetriebe HG sowie in der vorzugsweise vorhandenen Vorschaltgruppe GV jeweils die höchsten Gänge eingelegt. Die Nachschaltgruppe GP befindet sich beim Starten des Verbrennungsmotors VM in Neutral.

Im Ausführungsbeispiel der Fig. 1 und 2 ist die elektrische Maschine EM des Hybridantriebs jeweils permanent zwischen dem Hauptgetriebe HG des Gruppengetriebes CT und der Nachschaltgruppe GP desselben in den Kraftfluss bzw. Momentfluss geschaltet.

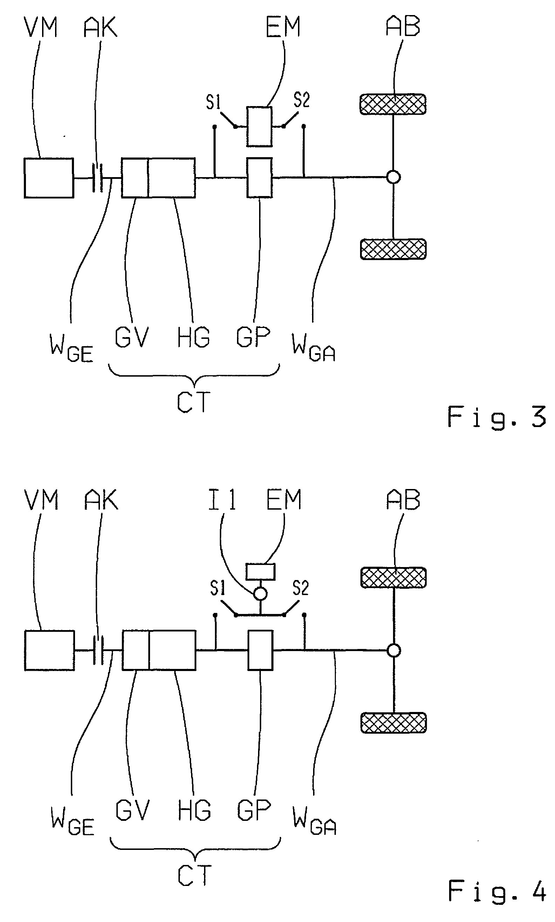

Demgegenüber zeigen Fig. 3 bis 5 Ausführungsbeispiele der Erfindung, in welchen die elektrische Maschine EM des Hybridantriebs abhängig von der Schaltung mindestens eines Schaltelements zwischen dem Hauptgetriebe HG und der Nachschaltgruppe GP und/oder zwischen der Nachschaltgruppe GP und dem Achsantrieb AB an den Kraftfluss bzw. Momentfluss des Antriebsstrangs gekoppelt bzw. koppelbar ist.

So sind in den Ausführungsbeispielen der Fig. 3, 4 zwei Schaltelemente S1 und S2 vorhanden, die unabhängig voneinander angesteuert werden können, wobei über das Schaltelement S1 die elektrische Maschine EM zwischen dem Hauptgetriebe HG und der Nachschaltgruppe GP an den Kraftfluss bzw. Momentfluss des Antriebsstrangs ankoppelbar ist, und wobei über das Schaltelement S2 die elektrische Maschine EM des Hybridantriebs zwischen die Nachschaltgruppe GP und dem Achsantrieb AB an den Kraftfluss bzw. Momentfluss des Antriebsstrangs ankoppelbar ist. Dann, wenn beide Schaltelemente S1 und S2 geöffnet sind, ist die elektrische Maschine EM vollständig vom Kraftfluss bzw. Momentfluss des Antriebsstrangs gekoppelt. Durch Schließen beider Schaltelemente S1 und S2 kann die elektrische Maschine EM sowohl zwischen dem Hauptgetriebe HG und der Nachschaltgruppe GP als auch zwischen der Nachschaltgruppe GP und dem Achsantrieb AB an den Kraftfluss bzw. Momentfluss des Antriebsstrangs gekoppelt werden. In Fig. 4 ist wiederum zusätzlich die Übersetzungsstufe I1 vorhanden, die sowohl bei geschlossenem Schaltelement S1 als auch bei geschlossenem Schaltelement S2 wirksam ist.

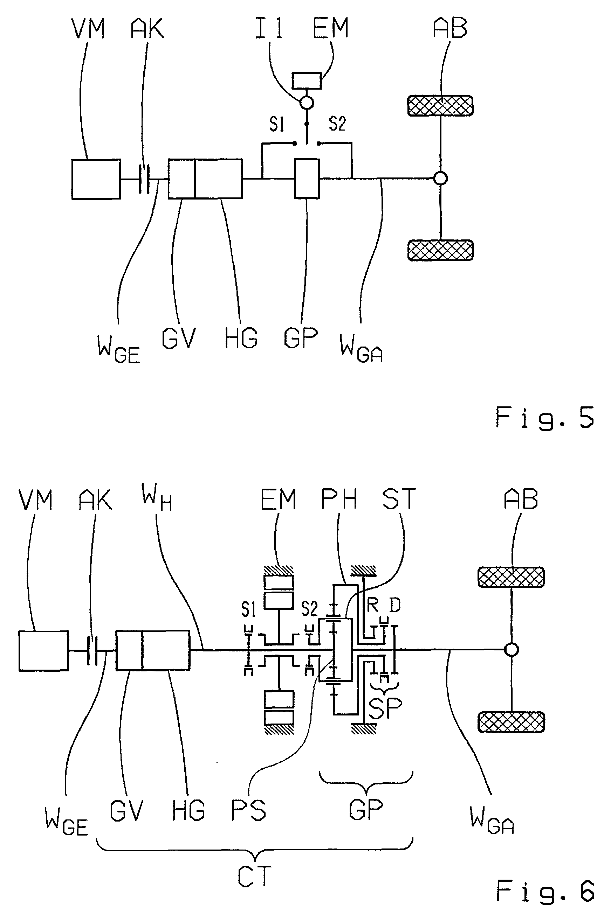

Im Ausführungsbeispiel der Fig. 5 sind die in Fig. 4 als unabhängige Schaltelemente S1 und S2 ausgebildeten Schaltelemente durch ein Doppelschaltelement S1 /S2 ersetzt, welches entweder die elektrische Maschine EM unter Zwischenschaltung der Übersetzungsstufe I1 zwischen dem Hauptgetriebe HG und der Nachschaltgruppe GP oder zwischen der Nachschaltgruppe GP und dem Achsantrieb AB an den Kraftfluss bzw. Momentfluss des Antriebsstrangs ankoppelt.

Bei der in Fig. 5 gezeigten Schaltstellung des Doppelschaltelements ist die elektrische Maschine EM vollständig vom Kraftfluss bzw. Momentfluss des Antriebsstrangs abgekoppelt.

Obwohl bei der Ausführung der Schaltelemente S1 und S2 als Doppelschaltelement gemäß Fig. 5 die elektrische Maschine EM nicht gleichzeitig sowohl zwischen dem Hauptgetriebe HG und der Nachschaltgruppe GP als auch zwischen der Nachschaltgruppe GP und dem Achsantrieb AB an den Kraftfluss bzw. Momentfluss ankoppelbar ist, ist die Ausführung der Schaltelemente S1 und S2 als Doppelschaltelement gemäß Fig. 5 bevorzugt, da diese Ausführung konstruktiv einfacher ist.

Die schaltbare Ankopplung der elektrischen Maschine EM des Hybridantriebs an den Kraftfluss bzw. Momentfluss des Antriebsstrangs gemäß Fig. 3 bis 5 erlaubt einen besonders bevorzugten Betrieb des Antriebsstrangs.

So ist es bei den Antriebssträngen der Fig. 3 bis 5 nicht nur möglich, bei Ausführung einer Schaltung im Hauptgetriebe HG sowie bei Ausführung einer Schaltung in der Vorschaltgruppe GV eine Zugkraftunterstützung bereitzustellen, sondern vielmehr auch bei Ausführung einer Schaltung in der Nachschaltgruppe GP. Hierzu wird so vorgegangen, dass zur Ausführung einer Schaltung in der Nachschaltgruppe GP vor Ausführung der Schaltung die elektrische Maschine EM zwischen der Nachschaltgruppe GP und dem Achsantrieb AB an den Kraftfluss bzw. Momentfluss des Antriebsstrangs angekoppelt wird und während der Ausführung an der Getriebeausgangswelle W_{GA} angekoppelt bleibt. Hierdurch wirkt die elektrische Maschine EM bei Ausführung einer Schaltung in der Nachschaltgruppe GP permanent auf den Achsantrieb AB und kann so eine Zugkraftunterstützung für den Antriebsstrang bereitstellen.

Weiterhin kann bei den Antriebssträngen der Fig. 3 bis 5 ein Gangnachführen beim Rekuperieren über alle Gänge erfolgen.

Dann, wenn die elektrische Maschine EM des Hybridantriebs vollständig vom Kraftfluss bzw. Momentfluss des Antriebsstrangs abgekoppelt ist, können zum Beispiel bei einer Fahrt mit konstanter Geschwindigkeit Nulllastverluste der elektrischen Maschine EM vermieden werden.

Ferner ist bei der ganz abgekoppelten Position der elektrischen Maschine EM des Hybridantriebs dann, wenn in der elektrischen Maschine EM des Hybridantriebs ein Fehler auftritt, ein konventioneller, rein verbrennungsmotorischer Betrieb des Antriebsstrangs über den Verbrennungsmotor VM des Hybridantriebs möglich.

Dann, wenn wie in Fig. 3 und 4 gezeigt, die Schaltelemente S1 und S2 als unabhängige Schaltelemente ausgeführt sind, kann die elektrische Maschine EM des Hybridantriebs gleichzeitig sowohl zwischen Hauptgetriebe HG und Nachschaltgruppe GP als auch zwischen Nachschaltgruppe GP und Achsantrieb AB an den Kraftfluss bzw. Momentfluss des Antriebsstrangs angekoppelt werden, wodurch es zum Beispiel möglich ist, die Abtriebswelle bzw. Getriebeausgangswelle W_{GA} zur Bereitstellung einer Parkbremse für den Antriebsstrang zu blockieren.

Bei den Schaltelementen S1 und S2 der Antriebsstränge der Fig. 3 bis 5 handelt es sich vorzugsweise um Klauenschaltelemente, deren Synchronisation aktiv durch die elektrische Maschine EM erfolgt.

Die Schaltelemente S1 und S2 werden vorzugsweise pneumatisch mit Druckluft betätigt.

Weitere vorteilhafte Ausgestaltungen und Betriebsweisen eines Antriebsstrangs mit einer elektrischen Maschine EM eines Hybridantriebs, die im Sinne der Fig. 3 bis 5 schaltbar an den Kraftfluss bzw. Momentfluss des Antriebsstrangs zwischen Hauptgetriebe HG und Nachschaltgruppe GP und/oder zwischen Nachschaltgruppe GP und Achsantrieb AB gekoppelt werden kann, werden nachfolgend unter Bezugnahme auf Fig. 6 bis 10 beschrieben, wobei Fig. 6 bis 10 solche Varianten eines erfindungsgemäßen Antriebsstrangs zeigen, in welchen die Nachschaltgruppe GP als Bereichsgruppe bzw. Range-Gruppe in Planetenbauweise ausgeführt ist.

So zeigen Fig. 6 bis 10 jeweils eine als Range-Gruppe bzw. Bereichsgruppe ausgeführte Nachschaltgruppe GP in Planetenbauweise, wobei ein Sonnenrad PS der Nachschaltgruppe GP mit einer Hauptwelle W_{H} des Hauptgetriebes HG gekoppelt ist, und wobei ein Steg ST der Nachschaltgruppe GP über die Ausgangswelle W_{GA} des Gruppengetriebes GT an den Achsantrieb AB gekoppelt ist. Ein Hohlrad PH der Nachschaltgruppe GP steht mit einem Schaltpaket SP der Nachschaltgruppe GP in Verbindung, wobei das Schaltpaket SP die Nachschaltgruppe GP wechselweise durch die Verbindung des Hohlrads PH mit einem feststehenden Gehäuseteil in eine Rangefahrtstufe R oder durch Verbindung des Hohlrads PH mit der Getriebeausgangswelle W_{GA} des Gruppengetriebes CT in eine Direktfahrtstufe D schaltet.

Weiterhin zeigen Fig. 6 bis 10 wiederum die Schaltelemente S1 und S2, die in Fig. 6 über ein Doppelschaltelement ausgeführt sind, wobei in der Schaltstellung S1 die elektrische Maschine EM zwischen Hauptgetriebe HG und Nachschaltgruppe GP an die Hauptwelle W_{H} des Hauptgetriebes HG und damit an das Sonnenrad PS der Nachschaltgruppe GP gekoppelt ist, und wobei in der Schaltstellung S2 die elektrische Maschine EM zwischen Nachschaltgruppe GP und Achsantrieb AB über den Steg ST an die Getriebeausgangswelle W_{GA} gekoppelt ist.

Wie bereits ausgeführt, kann bei der schaltbaren Ankopplung der elektrischen Maschine EM des Hybridantriebs an den Kraftfluss bzw. Momentfluss des Antriebsstrangs ein Gangnachführen beim Rekuperieren über alle Gänge erfolgen. Wenn sich die Nachschaltgruppe GP bereits zu Beginn des Rekuperierens in der Rangefahrtstufe R befindet, dann braucht die Nachschaltgruppe GP nicht geschaltet zu werden. Befindet sich hingegen die Nachschaltgruppe GP zu Beginn der Rekuperation in der Direktfahrtstufe D, dann muss dieselbe geschaltet werden, um einen zum Verbrennungsmotor VM passenden Gang bereitzustellen. Die elektrische Maschine EM des Hybridantriebs bleibt dann in Fig. 6 über die Schaltstellung S2 an die Getriebeausgangswelle W_{GA} abtriebsseitig angekoppelt und kann dann unterbrechungsfrei rekuperieren.

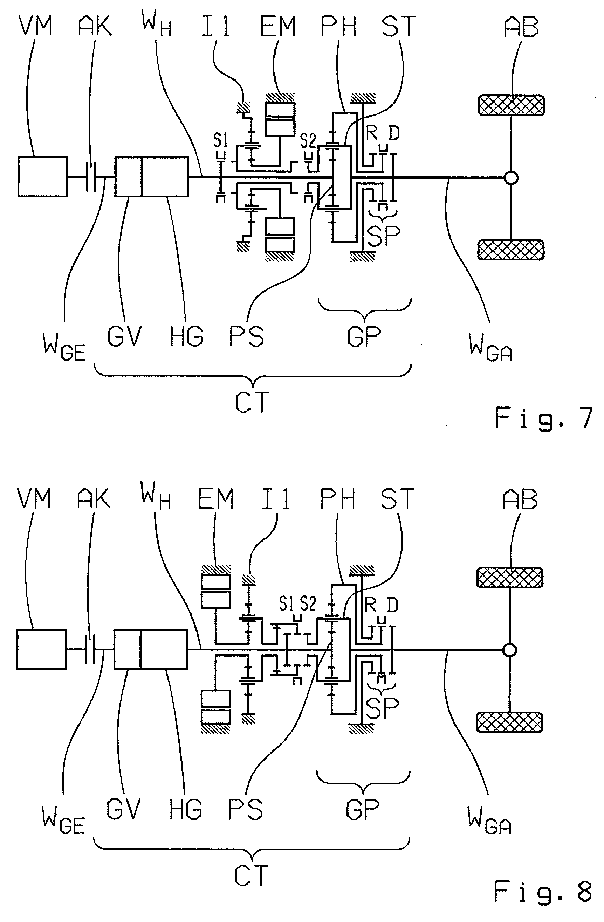

Fig. 7 zeigt eine Variante der Erfindung basierend auf Fig. 6, in welcher zusätzlich die Übersetzungsstufe I1, die als Konstantübersetzung ausgeführt ist, vorhanden ist, wobei die Übersetzungsstufe I1 in Fig. 7 als Planetengetriebe mit sogenannter Standgetriebeübersetzung ausgeführt ist.

Eine Alternative zur Fig. 7 zeigt Fig. 8, wobei sich Fig. 7 und 8 dadurch unterscheiden, dass in Fig. 8 die Schaltelemente S1 und S2 als gemeinsames Schaltpaket realisiert sind, und dass in Fig. 8 die Konstantübersetzung I1 zwischen der elektrischen Maschine EM und der Nachschaltgruppe GP positioniert ist, wohingegen in Fig. 7 die Schaltelemente S1 und S2 als separate Baugruppen ausgeführt sind und die Übersetzungsstufe I1 zwischen Hauptgetriebe HG und elektrischer Maschine EM positioniert ist.

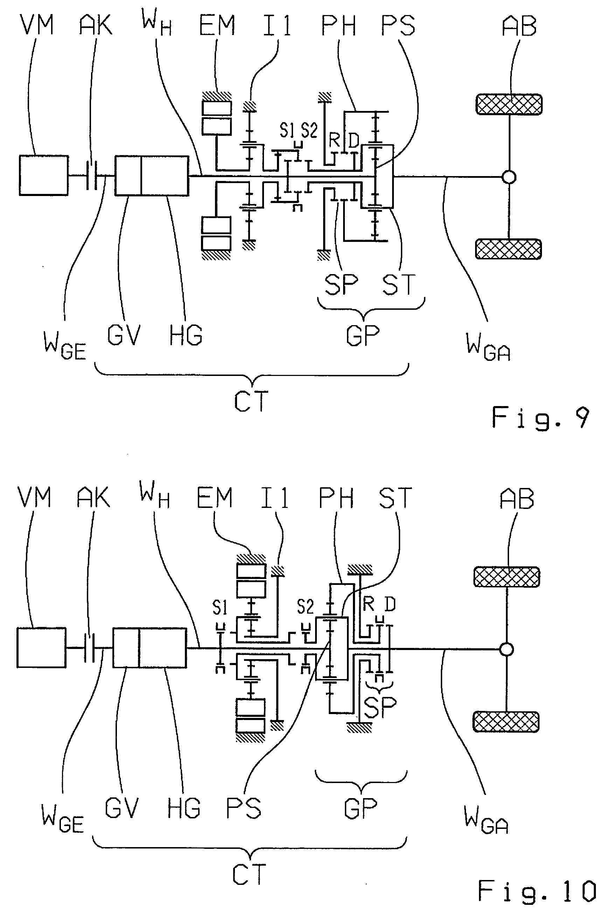

Fig. 9 zeigt eine Abwandlung des Antriebsstrangs der Fig. 8, in welcher das Schaltpaket SP, über welches die Nachschaltgruppe GP entweder in die Rangefahrtstufe R oder die Direktfahrtstufe D schaltbar ist, nicht wie in Fig. 8 gezeigt zwischen den Zahnrädern des Planetengetriebes und dem Achsantrieb AB positioniert ist, sondern vielmehr zwischen den Schaltelementen S1, S2 und den Zahnrädern des Planetengetriebes positioniert ist.

Während sich die Ausführung der Fig. 8 vor allem für hohe Konstantübersetzungen der Übersetzungsstufe I1 eignet, eignet sich die Ausführung der Fig. 9 vor allem für mittlere Konstantübersetzungen der Übersetzungsstufe I1.

Eine weitere Alternative für eine konstruktive Ausführung zeigt Fig. 10, wobei in Fig. 10 die Schaltelemente S1 und S2 nicht durch ein gemeinsames Schaltpaket bereitgestellt sind, sondern wiederum über separate Schaltelemente, wobei in Fig. 10 die Übersetzungsstufe I1 zwischen elektrischer Maschine EM und Nachschaltgruppe GP positioniert ist, und wobei in Fig. 10 das Schaltpaket SP der Nachschaltgruppe GP zwischen den Zahnrädern des Planetengetriebes der Nachschaltgruppe GP und dem Achsantrieb AB positioniert ist.

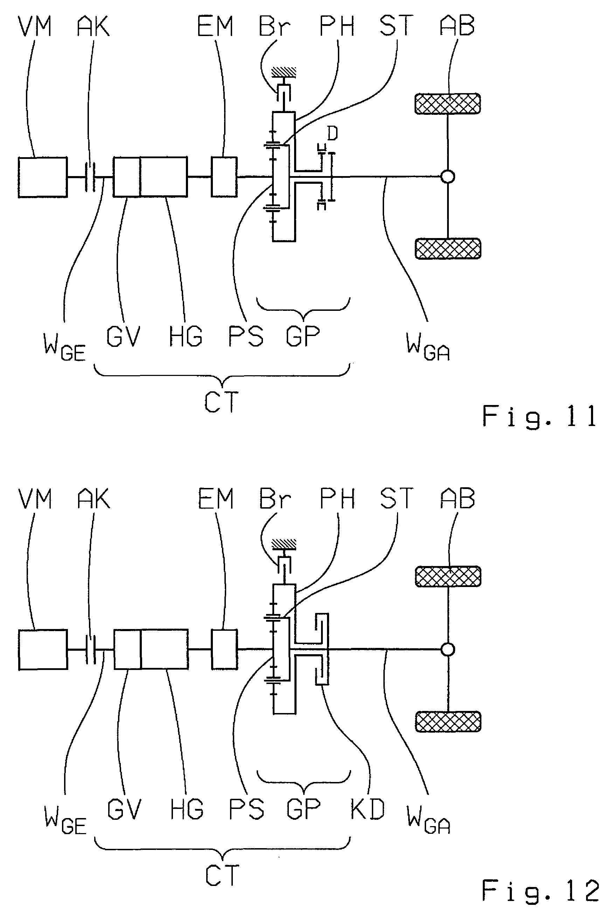

Fig. 11 zeigt eine Variante der Erfindung, in welcher die elektrische Maschine EM des Hybridantriebs permanent zwischen Hauptgetriebe HG und Nachschaltgruppe GP in den Kraftfluss bzw. Momentfluss des Antriebsstrangs geschaltet ist, wobei die Nachschaltgruppe GP in Planetenbauweise ausgeführt ist, und wobei dem Hohlrad PH der Nachschaltgruppe GP eine reibschlüssige Bremse BR zugeordnet ist. Die reibschlüssige Bremse Br, die dem Hohlrad PH der Nachschaltgruppe GP zugeordnet ist, kann dazu benutzt werden, um beim Zustart des Verbrennungsmotors VM aus einer elektrischen Fahrt heraus über eine schlupfend betriebene Bremse Br Motorschwankungen zu entkoppeln. Der Verbrennungsmotor VM wird hierbei durch Schließen der Anfahrkupplung AK gestartet, wodurch durch Motorschwankungen ein Störmoment in den Antriebsstrang eingetragen werden kann. Dieses kann über die Bremse Br kompensiert werden.

Vorzugsweise ist die schlupfende Bremse Br als trockene Bremse ausgelegt, womit bei überbrückter Nachschaltgruppe GP keine Schleppverluste an der Bremse Br auftreten.

Die reibschlüssige Bremse Br kann weiterhin als Anfahrelement genutzt werden. So ist es möglich, ausgehend von einem generatorischen Ladebetrieb der elektrischen Maschine EM im Stillstand des Kraftfahrzeugs, in welchem sich die Nachschaltgruppe GP in Neutral befindet und in welchem im Hauptgetriebe HG und in der Vorschaltgruppe GV ein Gang eingelegt sind, bei Betätigung eines Gaspedals oder Fahrpedals über einen Fahrer, zunächst durch Aufbringen eines abstützenden Moments an der Bremse Br ein Anfahrmoment aufzubringen. Anschließend wird der Schlupf auf die Anfahrkupplung AK verlagert und die Bremse Br ganz geschlossen, da die Anfahrkupplung AK in Gegensatz zur Bremse Br konstruktiv als Anfahrelement ausgelegt ist und daher verschleißunanfälliger ist. Ferner kann bei einem Start des Verbrennungsmotors VM über eine schlupfende Anfahrkupplung AK und beim gleichzeitigen Anfahren die Bremse Br zunächst als Anfahrelement genutzt werden, wobei dann anschließend wiederum die Funktion des Anfahrelements auf die Anfahrkupplung AK verlagert und die Bremse Br vollständig geschlossen wird.

Es sei darauf hingewiesen, dass auch in der Variante in Fig. 11 die elektrische Maschine EM über mindestens ein Schaltelement schaltbar an den Kraftfluss bzw. Momentfluss des Antriebsstrangs ankoppelbar sein kann.

Fig. 12 zeigt eine Weiterbildung der Variante der Fig. 11, wobei in der Variante der Fig. 12 der Nachschaltgruppe GP eine reibschlüssige Überbrückungskupplung KD zusätzlich zur Bremse Br zugeordnet ist. Im Ausführungsbeispiel der Fig. 12 ist die elektrische Maschine EM wiederum permanent zwischen dem Hauptgetriebe HG der Nachschaltgruppe GP an den Kraftfluss bzw. Momentfluss des Antriebsstrangs angekoppelt, wobei die elektrische Maschine EM am Sonnenrad SP der Nachschaltgruppe GP angreift. Die Bremse Br greift wiederum am Hohlrad PH der Nachschaltgruppe GP an. Die Überbrückungskupplung KD ist derart ausgeführt, dass eine erste Kupplungshälfte dem Hohlrad PH und eine zweite Kupplungshälfte dem Steg ST und damit der Getriebeausgangswelle W_{GA} zugeordnet ist.

Durch die Verwendung der Bremse Br in Verbindung mit der Überbrückungskupplung KD ist die als Range-Gruppe bzw. Bereichsgruppe ausgeführte Nachschaltgruppe GP lastschaltbar.

In Fig. 12 ist möglich, bei einer Lastschaltung der Nachschaltgruppe GP das Antriebsmoment auf das Moment abzusenken, das die elektrische Maschine EM alleine erzeugen kann. Hierdurch wird die Belastung von Bremse Br und Überbrückungskupplung KD reduziert.

Im Ausführungsbeispiel der Fig. 12 kann die elektrische Maschine EM ebenso wie bei der Variante der Fig. 11 unter Zwischenanordnung einer Übersetzungsstufe 11 an den Momentfluss bzw. Kraftfluss des Antriebsstrangs gekoppelt sein.

### Bezugszeichen

- AB: Achsantrieb
- AK: Anfahrkupplung
- Br: Bremse
- CT: Gruppengetriebe
- D: Direktfahrtstufe
- EM: elektrische Maschine
- GV: Vorschaltgruppe
- GP: Nachschaltgruppe
- HG: Hauptgetriebe
- HW: Hohlwelle
- I1: Übersetzungsstufe
- KD: Überbrückungskupplung
- PS: Sonnenrad
- PT: Planetenträger
- PH: Hohlrad
- R: Rangefahrtstufe
- SP: Schaltpaket
- S1: Schaltelement/Schaltstellung
- S2: Schaltelement/Schaltstellung
- VM: Verbrennungsmotor
- W_{GA}: Ausgangswelle
- W_{GE}: Eingangswelle
- W_{H}: Hauptwelle

## Patentansprüche

1. Antriebsstrang eines Kraftfahrzeugs, mit einem einen Verbrennungsmotor (VM) und eine elektrische Maschine (EM) aufweisenden Hybridantrieb und einem automatisierten Gruppengetriebe (CT), wobei das automatisierte Gruppengetriebe (CT) zumindest ein Hauptgetriebe (HG) und eine dem Hauptgetriebe (HG) antriebstechnisch nachgeschaltete, insbesondere als Bereichsgruppe ausgeführte, Nachschaltgruppe (GP) aufweist, wobei eine Eingangswelle (W_{GE}) des automatisierten Gruppengetriebes (CT) über eine steuerbare Anfahrkupplung (AK) mit dem Verbrennungsmotor (VM) des Hybridantriebs und eine Ausgangswelle (W_{GA}) des automatisierten Gruppengetriebes (CT) mit einem Achsantrieb (AB) in Verbindung steht, wobei die elektrische Maschine (EM) des Hybridantriebs zwischen dem Hauptgetriebe (HG) und der Nachschaltgruppe (GP) und/oder zwischen der Nachschaltgruppe (GP) und dem Achsantrieb (AB) an den Kraftfluss bzw. Momentfluss des Antriebstrangs koppelbar ist, **dadurch gekennzeichnet, dass** die elektrische Maschine (EM) des Hybridantriebs abhängig von der Schaltstellung von mindestens zwei Schaltelementen (S1, S2) entweder ausschließlich zwischen dem Hauptgetriebe (HG) und der Nachschaltgruppe (GP) oder ausschließlich zwischen der Nachschaltgruppe (GP) und dem Achsantrieb (AB) oder sowohl zwischen dem Hauptgetriebe (HG) und der Nachschaltgruppe (GP) als auch zwischen der Nachschaltgruppe (GP) und dem Achsantrieb (AB) an den Kraftfluss bzw. Momentfluss des Antriebstrangs gekoppelt oder vom Kraftfluss bzw. Momentfluss des Antriebstrangs vollständig abgekoppelt ist.

2. Antriebsstrang eines Kraftfahrzeugs, mit einem einen Verbrennungsmotor (VM) und eine elektrische Maschine (EM) aufweisenden Hybridantrieb und einem automatisierten Gruppengetriebe (CT), wobei das automatisierte Gruppengetriebe (CT) zumindest ein Hauptgetriebe (HG) und eine dem Hauptgetriebe (HG) antriebstechnisch nachgeschaltete, insbesondere als Bereichsgruppe ausgeführte, Nachschaltgruppe (GP) aufweist, wobei eine Eingangswelle (W_{GE}) des automatisierten Gruppengetriebes (CT) über eine steuerbare Anfahrkupplung (AK) mit dem Verbrennungsmotor (VM) des Hybridantriebs und eine Ausgangswelle (W_{GA}) des automatisierten Gruppengetriebes (CT) mit einem Achsantrieb (AB) in Verbindung steht, wobei die elektrische Maschine (EM) des Hybridantriebs zwischen dem Hauptgetriebe (HG) und der Nachschaltgruppe (GP) und/oder zwischen der Nachschaltgruppe (GP) und dem Achsantrieb (AB) an den Kraftfluss bzw. Momentfluss des Antriebstrangs koppelbar ist, **dadurch gekennzeichnet, dass** die elektrische Maschine (EM) des Hybridantriebs abhängig von der Schaltstellung eines als Doppelschaltelement ausgebildeten Schaltelements (S1, S2) entweder ausschließlich zwischen dem Hauptgetriebe (HG) und der Nachschaltgruppe (GP) oder ausschließlich zwischen der Nachschaltgruppe (GP) und dem Achsantrieb (AB) an den Kraftfluss bzw. Momentfluss des Antriebstrangs gekoppelt oder vom Kraftfluss bzw. Momentfluss des Antriebstrangs vollständig abgekoppelt ist.

3. Antriebsstrang nach Anspruch 1 oder 2, **dadurch gekennzeichnet, dass** die elektrische Maschine (EM) des Hybridantriebs unter Zwischenschaltung einer Übersetzungsstufe (11) an den Kraftfluss bzw. Momentfluss des Antriebstrangs gekoppelt ist.

4. Antriebsstrang nach einem der Ansprüche 1 bis 3, **dadurch gekennzeichnet, dass** die Nachschaltgruppe (GP) in Planetenbauweise mit einem Sonnerad (PS), einem Hohlrad (PH) und einem Steg (ST) ausgeführt ist, wobei das Sonnerad (PS) mit einer Hauptwelle (W_{H}) des Hauptgetriebes (HG) und der Steg (ST) mit dem Achsantrieb (AB) gekoppelt ist, wobei die elektrische Maschine (EM) des Hybridantriebs dann, wenn dieselbe zwischen dem Hauptgetriebe (HG) und der Nachschaltgruppe (GP) an den Kraftfluss bzw. Momentfluss des Antriebstrangs gekoppelt ist, an das Sonnerad (PS) angebunden ist, und wobei die elektrische Maschine (EM) des Hybridantriebs dann, wenn dieselbe zwischen der Nachschaltgruppe (GP) und den Achsantrieb (AB) an den Kraftfluss bzw. Momentfluss des Antriebstrangs gekoppelt ist, an den Steg (ST) angebunden ist.

5. Antriebsstrang nach Anspruch 4, **dadurch gekennzeichnet, dass** eine Übersetzungsstufe (l1) für die elektrische Maschine zwischen der elektrischen Maschine (EM) und der Nachschaltgruppe (GP) positioniert ist.

6. Antriebsstrang nach Anspruch 4 oder 5, **dadurch gekennzeichnet, dass** am Hohlrad (PH) der Nachschaltgruppe (GP) eine reibschlüssige Bremse (Br) angreift.

7. Antriebsstrang nach Anspruch 6, **dadurch gekennzeichnet, dass** der Nachschaltgruppe (GP) eine reibschlüssige Überbrückungskupplung (KD) zugeordnet ist, wobei eine erste Kupplungshälfte der Überbrückungskupplung (KD) am Hohlrad (PH) und eine zweite Kupplungshälfte der Überbrückungskupplung (KD) am Achsantrieb (AB) angreift.

8. Verfahren zum Betreiben eines Antriebsstrangs nach einem der Ansprüche 1 bis 7, **dadurch gekennzeichnet, dass** bei Ausführung einer Schaltung im Hauptgetriebe (HG) mit der elektrische Maschine (EM) des Hybridantriebs eine Zugkraftunterbrechung am Achsantrieb (AB) kompensiert bzw. aufgefüllt wird.

9. Verfahren nach Anspruch 8, **dadurch gekennzeichnet, dass** dann, wenn dem Hauptgetriebe (HG) antriebstechnisch eine insbesondere als Splitgruppe ausgeführte Vorschaltgruppe (GV) vorgeschaltet ist, bei Ausführung einer Schaltung in der Vorschaltgruppe (GV) mit der elektrische Maschine (EM) des Hybridantriebs eine Zugkraftunterbrechung am Achsantrieb (AB) kompensiert bzw. aufgefüllt wird.

10. Verfahren nach Anspruch 8 oder 9, **dadurch gekennzeichnet, dass** dann, wenn das Hauptgetriebe (HG) über einen Overdrivegang mit einer Übersetzung keiner als 1 verfügt, zum Starten des Verbrennungsmotors (VM) über die elektrische Maschine (EM) des Hybridantriebs im Hauptgetriebe (HG) der Overdrivegang eingelegt wird.

11. Verfahren zum Betreiben eines Antriebsstrangs nach einem der Ansprüche 1 bis 7, **dadurch gekennzeichnet, dass** dann, wenn in der Nachschaltgruppe (GP) eine Schaltung ausgeführt wird, vor Ausführung der Schaltung in der Nachschaltgruppe (GP) die elektrische Maschine (EM) des Hybridantriebs an den Achsantrieb (AB) angekoppelt wird und während der Ausführung der Schaltung in der Nachschaltgruppe (GP) zur Kompensation oder Auffüllung der Zugkraftunterbrechung an den Achsantrieb (AB) angekoppelt bleibt.

## Claims

1. Drive train of a motor vehicle, having a hybrid drive which has an internal combustion engine (VM) and an electric machine (EM), and an automated group transmission (CT), the automated group transmission (CT) having at least one main transmission (HG) and a rear-mounted group (GP) which is connected downstream of the main transmission (HG) in drive terms and is configured, in particular, as a range group, an input shaft (W_{GE}) of the automated group transmission (CT) being connected via a controllable start-up clutch (AK) to the internal combustion engine (VM) of the hybrid drive and an output shaft (W_{GA}) of the automated group transmission (CT) being connected to an axle drive (AB), it being possible for the electric machine (EM) of the hybrid drive to be connected to the power flow or torque flow of the drive train between the main transmission (HG) and the rear-mounted group (GP) and/or between the rear-mounted group (GP) and the axle drive (AB), **characterized in that**, in a manner which is dependent on the shifting position of at least two shifting elements (S1, S2), the electric machine (EM) of the hybrid drive is either coupled to the power flow or torque flow of the drive train exclusively between the main transmission (HG) and the rear-mounted group (GP) or exclusively between the rear-mounted group (GP) and the axle drive (AB) or both between the main transmission (HG) and the rear-mounted group (GP) and between the rear-mounted group (GP) and the axle drive (AB) or is decoupled completely from the power flow or torque flow of the drive train.

2. Drive train of a motor vehicle, having a hybrid drive which has an internal combustion engine (VM) and an electric machine (EM), and an automated group transmission (CT), the automated group transmission (CT) having at least one main transmission (HG) and a rear-mounted group (GP) which is connected downstream of the main transmission (HG) in drive terms and is configured, in particular, as a range group, an input shaft (W_{GE}) of the automated group transmission (CT) being connected via a controllable start-up clutch (AK) to the internal combustion engine (VM) of the hybrid drive and an output shaft (W_{GA}) of the automated group transmission (CT) being connected to an axle drive (AB), it being possible for the electric machine (EM) of the hybrid drive to be coupled to the power flow or torque flow of the drive train between the main transmission (HG) and the rear-mounted group (GP) and/or between the rear-mounted group (GP) and the axle drive (AB), **characterized in that**, in a manner which is dependent on the shifting position of a shifting element (S1, S2) which is configured as a double shifting element, the electric machine (EM) of the hybrid drive is coupled to the power flow or torque flow of the drive train either exclusively between the main transmission (HG) and the rear-mounted group (GP) or exclusively between the rear-mounted group (GP) and the axle drive (AB) or is decoupled completely from the power flow or torque flow of the drive train.

3. Drive train according to Claim 1 or 2, **characterized in that** the electric machine (EM) of the hybrid drive is coupled to the power flow or torque flow of the drive train with a transmission stage (I1) being connected in between.

4. Drive train according to one of Claims 1 to 3, **characterized in that** the rear-mounted group (GP) is configured in a planetary design with a sun gear (PS), an internal gear (PH) and a spider (ST), the sun gear (PS) being coupled to a main shaft (W_{H}) of the main transmission (HG) and the spider (ST) being coupled to the axle drive (AB), the electric machine (EM) of the hybrid drive being attached to the sun gear (PS) when the said electric machine (EM) is coupled to the power flow or torque flow of the drive train between the main transmission (HG) and the rear-mounted group (GP), and the electric machine (EM) of the hybrid drive being attached to the spider (ST) when the said electric machine (EM) is coupled to the power flow or torque flow of the drive train between the rear-mounted group (GP) and the axle drive (AB).

5. Drive train according to Claim 4, **characterized in that** a transmission stage (I1) for the electric machine is positioned between the electric machine (EM) and the rear-mounted group (GP).

6. Drive train according to Claim 4 or 5, **characterized in that** a frictional brake (Br) acts on the internal gear (PH) of the rear-mounted group (GP).

7. Drive train according to Claim 6, **characterized in that** the rear-mounted group (GP) is assigned a frictional lock-up clutch (KD), a first clutch half of the lock-up clutch (KD) acting on the internal gear (PH) and a second clutch half of the lock-up clutch (KD) acting on the axle drive (AB).

8. Method for operating a drive train according to one of Claims 1 to 7, **characterized in that**, if a shift is carried out in the main transmission (HG), an interruption in the tractive power at the axle drive (AB) is compensated for or filled by way of the electric machine (EM) of the hybrid drive.

9. Method according to Claim 8, **characterized in that**, if a front-mounted group (GV) which is configured, in particular, as a splitter group is connected upstream of the main transmission (HG) in drive terms, an interruption in the tractive power at the axle drive (AB) is compensated for or filled by way of the electric machine (EM) of the hybrid drive if a shift is carried out in the front-mounted group (GV).

10. Method according to Claim 8 or 9, **characterized in that**, when the main transmission (HG) has an overdrive gear with a transmission ratio smaller than 1, the overdrive gear is engaged in the main transmission (HG) in order to start the internal combustion engine (VM) via the electric machine (EM) of the hybrid drive.

11. Method for operating a drive train according to one of Claims 1 to 7, **characterized in that**, when a shift is carried out in the rear-mounted group (GP), the electric machine (EM) of the hybrid drive is coupled to the axle drive (AB) before the shift is carried out in the rear-mounted group (GP) and remains coupled to the axle drive (AB) in order to compensate for or fill the interruption in the tractive force while the shift is being carried out in the rear-mounted group (GP).

## Revendications

1. Chaîne cinématique d'un véhicule automobile, avec un entraînement hybride présentant un moteur à combustion interne (VM) et une machine électrique (EM) et avec un groupe planétaire automatisé (CT), dans laquelle le groupe planétaire automatisé (CT) présente au moins une transmission principale (HG) et un groupe aval (GP) monté en aval de la transmission principale (HG) en termes d'entraînement et réalisé notamment sous forme de groupe de zone, dans laquelle un arbre d'entrée (W_{GE}) du groupe planétaire automatisé (CT) est en liaison par un embrayage de démarrage réglable (AK) avec le moteur à combustion interne (VM) de l'entraînement hybride et un arbre de sortie (W_{GA}) du groupe planétaire automatisé (CT) est en liaison avec un entraînement d'essieu (AB), dans laquelle la machine électrique (EM) de l'entraînement hybride peut être couplée au flux de force ou au flux de couple de la chaîne cinématique entre la transmission principale (HG) et le groupe aval (GP) et/ou entre le groupe aval (GP) et l'entraînement d'essieu (AB), **caractérisée en ce que** la machine électrique (EM) de l'entraînement hybride est, en fonction de la position d'engagement d'au moins deux éléments de changement de vitesse (S1, S2), couplée au flux de force ou au flux de couple de la chaîne cinématique soit exclusivement entre la transmission principale (HG) et le groupe aval (GP) soit exclusivement entre le groupe aval (GP) et l'entraînement d'essieu (AB) soit aussi bien entre la transmission principale (HG) et le groupe aval (GP) qu'entre le groupe aval (GP) et l'entraînement d'essieu (AB) ou complètement découplée du flux de force ou du flux de couple de la chaîne cinématique.

2. Chaîne cinématique d'un véhicule automobile, avec un entraînement hybride présentant un moteur à combustion interne (VM) et une machine électrique (EM) et avec un groupe planétaire automatisé (CT), dans laquelle le groupe planétaire automatisé (CT) présente au moins une transmission principale (HG) et un groupe aval (GP) monté en aval de la transmission principale (HG) en termes d'entraînement et réalisé notamment sous forme de groupe de zone, dans laquelle un arbre d'entrée (W_{GE}) du groupe planétaire automatisé (CT) est en liaison par un embrayage de démarrage réglable (AK) avec le moteur à combustion interne (VM) de l'entraînement hybride et un arbre de sortie (W_{GA}) du groupe planétaire automatisé (CT) est en liaison avec un entraînement d'essieu (AB), dans laquelle la machine électrique (EM) de l'entraînement hybride peut être couplée au flux de force ou au flux de couple de la chaîne cinématique entre la transmission principale (HG) et le groupe aval (GP) et/ou entre le groupe aval (GP) et l'entraînement d'essieu (AB), **caractérisée en ce que** la machine électrique (EM) de l'entraînement hybride est, en fonction de la position d'engagement d'un élément de changement de vitesse (S1, S2) réalisé en forme de double élément de changement de vitesse, couplée au flux de force ou au flux de couple de la chaîne cinématique soit exclusivement entre la transmission principale (HG) et le groupe aval (GP) soit exclusivement entre le groupe aval (GP) et l'entraînement d'essieu (AB) ou complètement découplée du flux de force ou du flux de couple de la chaîne cinématique.

3. Chaîne cinématique selon la revendication 1 ou 2, **caractérisée en ce que** la machine électrique (EM) de l'entraînement hybride est couplée au flux de force ou au flux de couple de la chaîne cinématique avec interposition d'un étage de démultiplication (I1).

4. Chaîne cinématique selon l'une quelconque des revendications 1 à 3, **caractérisée en ce que** le groupe aval (GP) est réalisé sous forme planétaire avec une roue solaire (PS), une couronne creuse (PH) et une nervure (ST), dans laquelle la roue solaire (PS) est couplée à un arbre principal (W_{H}) de la transmission principale (HG) et la nervure (ST) est couplée à l'entraînement d'essieu (AB), dans laquelle la machine électrique (EM) de l'entraînement hybride est reliée à la roue solaire (PS) lorsqu'elle-même est couplée au flux de force ou au flux de couple de la chaîne cinématique entre la transmission principale (HG) et le groupe aval (GP), et dans laquelle la machine électrique (EM) de l'entraînement hybride est reliée à la nervure (ST) lorsqu'elle-même est couplée au flux de force ou au flux de couple entre le groupe aval (GP) et l'entraînement d'essieu (AB).

5. Chaîne cinématique selon la revendication 4, **caractérisée en ce qu'**un étage de démultiplication (I1) pour la machine électrique est positionné entre la machine électrique (EM) et le groupe aval (GP).

6. Chaîne cinématique selon la revendication 4 ou 5, **caractérisée en ce qu'**un frein à friction (Br) opère sur la couronne creuse (PH) du groupe aval (GP).

7. Chaîne cinématique selon la revendication 6, **caractérisée en ce qu'**un embrayage de pontage à friction (KD) est associé au groupe aval (GP), dans laquelle une première moitié d'embrayage de l'embrayage de pontage (KD) opère sur la couronne creuse (PH) et une deuxième moitié d'embrayage de l'embrayage de pontage (KD) opère sur l'entraînement d'essieu (AB).

8. Procédé pour faire fonctionner une chaîne cinématique selon l'une quelconque des revendications 1 à 7, **caractérisé en ce que**, lors de l'exécution d'un changement de vitesse dans la transmission principale (HG), une interruption de la force de traction à l'entraînement d'essieu (AB) est compensée ou comblée avec la machine électrique (EM) de l'entraînement hybride.

9. Procédé selon la revendication 8, **caractérisé en ce que**, lorsqu'un groupe amont (GV) réalisé en particulier sous forme de groupe de division est monté en amont de la transmission principale (HG) en termes d'entraînement, lors de l'exécution d'un changement de vitesse dans le groupe amont (GV) une interruption de force de traction à l'entraînement d'essieu (AB) est compensée ou comblée avec la machine électrique (EM) de l'entraînement hybride.

10. Procédé selon la revendication 8 ou 9, **caractérisé en ce que**, lorsque la transmission principale (HG) dispose d'une position overdrive avec une démultiplication inférieure à 1, on engage la position overdrive dans la transmission principale (HG) pour le démarrage du moteur à combustion interne (VM) au moyen de la machine électrique (EM) de l'entraînement hybride.

11. Procédé pour faire fonctionner une chaîne cinématique selon l'une quelconque des revendications 1 à 7, **caractérisé en ce que**, lorsque l'on exécute un changement de vitesse dans le groupe aval (GP), la machine électrique (EM) de l'entraînement hybride est couplée à l'entraînement d'essieu (AB) avant l'exécution du changement de vitesse dans le groupe aval (GP) et elle reste couplée à l'entraînement d'essieu (AB) pendant l'exécution du changement de vitesse dans le groupe aval (GP) afin de compenser ou de combler l'interruption de force de traction.
